# EUROPEAN PATENT SPECIFICATION

(11) **EP 3 873 231 B1**
(45) Date of publication and mention of the grant of the patent: **14.09.2022**
(21) Application number: 19789702.8
(22) Date of filing: 23.10.2019
(51) Int. Cl.: A23L 27/00

(54) **PARTICULATE FLAVOURING COMPOSITION COMPRISING PLATED LACTATE PARTICLES**
TEILCHENFÖRMIGE AROMATISIERUNGSZUSAMMENSETZUNG MIT PLATTIERTEN LAKTATTEILCHEN
COMPOSITION AROMATISANTE PARTICULAIRE COMPRENANT DES PARTICULES DE LACTATE PLAQUÉES

(30) Priority: 01.11.2018 EP 18203916
(43) Date of publication of application: 08.09.2021
(73) Proprietor: Purac Biochem B.V., 4206 AC Gorinchem (NL)
(72) Inventor: KUSUMAWARDANI, Heny, 3067GJ Rotterdam (NL); MARMOLEJO, Cynthia Berenice, 3541 TN Utrecht (NL); PRITAWARDANI, Prita, 4206 AC Gorinchem (NL); VAN LANKVELD, Adrianus Johannes Maria, 5462 GL Veghel (NL)
(74) Representative: Nederlandsch Octrooibureau
(86) International application number: PCT/EP2019/078842
(87) International publication number: WO 2020/089006

(56) References cited:
- WO-A1-2008/071757
- US-A- 4 511 584
- US-A- 4 537 784
- US-A1- 2004 115 315

## Description

### TECHNICAL FIELD OF THE INVENTION

The present invention relates to a particulate flavouring composition comprising plated lactate particles comprising (i) a lactate particle containing calcium lactate and optionally edible acid; and (ii) a liquid flavouring that is absorbed onto the lactate particle.

The plated lactate powders of the present invention are easy to produce, exhibit excellent physical stability and are capable of imparting intense flavour notes to foods and beverages.

### TECHNICAL BACKGROUND OF THE INVENTION

Most flavourings for use in foods and beverages are not a single flavour substance. A flavouring is usually created by compounding many flavouring materials at the proper concentration of each component to produce the desired flavour characteristics and profile.

Flavourings are often produced in a very concentrated form and need to be diluted with solvent or carrier materials so they can be dosed accurately and to facilitate their handling. There are several ways to dilute concentrated flavourings. The most common method is to dilute liquid concentrated flavouring with a proper solvent, or to dissolve a solid concentrated flavouring in a solvent. The main advantage of liquid flavourings is that they can be easily mixed together and will achieve a homogeneous distribution of each individual component in the finished flavouring if they are miscible in each other.

In many flavour applications, the flavouring needs to be applied in the form of a powder. Spray drying, spray chilling and adsorption on powder are the answers to this need. Adsorption of liquid flavouring on powder to produce a particulate flavouring is an age old practice, called "plating". The solid powder is called "carrier". Sodium chloride, dextrose, sugar, maltodextrins and starches are commonly used as the carriers. This process is a pure physical action of solid-liquid inter-surface tension and surface adsorption.

US 4,511,584 describes a particulate food acidulant consisting essentially of lactic acid plated onto particulate calcium lactate carrier in a weight ratio of lactic acid (as anhydrous) to carrier of about 1:1 to about 3:2, and a water insoluble hard, edible, lipid coating substantially encapsulating said carrier and acid in an amount effective to prevent substantial release of acid from said acidulant before said lipid coating melts.

US 4,537,784 describes a process for making a particulate food acidulant comprising calcium lactate carrier, lactic acid, and lipid coating comprising the steps of:
- plating lactic acid onto particulate calcium lactate carrier by spray applying said lactic acid onto said calcium lactate carrier, while said carrier is in the form of a fluid bed, from a lactic acid solution of more than 80% concentration;
- then encapsulating said carrier and acid by spray coating said carrier and acid with a molten edible lipid in an amount effective to prevent substantial release of acid from said acidulant before said lipid coating melts, while said carrier and acid are in the form of a fluid bed.

WO 2014/206956 describes a flavor composition comprising a mixture of:
a) a first powder comprising a liquid flavor having a logP of up to about 3.5 loaded onto a first solid matrix material; and
b) a second powder comprising a solvent loaded onto a second solid matrix material wherein the second solid matrix material is different than the first solid matrix material and wherein the flavor composition comprises a free-flowing powder.

The first solid matrix material may be selected from the group consisting of dextrin, starch, hydrophobic ally modified starch, vegetable flours, sugars, table salt, calcium carbonate, calcium phosphate, water-soluble sweeteners, flavor modifiers or taste enhancers. The second solid matrix material may be selected from the group consisting of microcrystalline cellulose, silicon dioxide, clay powder, or a solid food ingredient with a water solubility below 100 mg/L.

Domian et al. (Flowability and homogeneity of food powders with plated oil ingredient, Journal of Food Process Engineering (2013); 36 626-633) describe plating of different carrier materials with a mixture of rapeseed oil and red pepper oleoresin. Carrier materials used are semi-hydrolysed maltodextrin, cooking salt, glucose, pregelatinised maize starch and hydrophobic silica.

US 2004/115315 describes encapsulated crystalline lactic acid particles.

WO 2008/071757 describes a particulate composition comprising calcium lactate and calcium citrate microparticles having an average diameter from 0.1 to 20 µm, wherein the ratio by weight of calcium lactate to calcium citrate, based on the dry weight, is 80:20 to 30:70, and wherein the calcium lactate is a non-polymeric agglomeration agent for the calcium citrate microparticles.

In the US, calcium lactate is approved for use as a firming agent, flavour enhancer, flavouring agent or adjuvant, leavening agent, nutrient supplement, and a stabilizer and thickener in food with no limitations other than GMPs (21CFR § 184.1207).

### SUMMARY OF THE INVENTION

The inventors have developed a particulate flavouring composition comprising lactate particles that are plated with liquid flavouring. The inventors have unexpectedly discovered that lactate powder is capable of absorbing significant quantities of liquid flavouring.

Thus, the present invention provides a particulate flavouring composition comprising at least 60 wt.% of plated lactate particles, the plated lactate particle comprising (i) a lactate particle containing calcium lactate and optionally edible acid; and (ii) a liquid flavouring that is absorbed onto the lactate particle; the plated lactate particle containing:
- 25-99.5 wt.% calcium lactate;
- 0-70 wt.% edible acid; and
- 0.5-40 wt.% of the liquid flavouring; and
wherein the combination of calcium lactate, edible acid and the liquid flavouring constitutes at least 90 wt.%, preferably at least 95 wt.% of the plated lactate particle.

The flavour plated lactate powder of the present invention is easy to produce, exhibits excellent physical stability and is capable of imparting intense flavour notes to foods and beverages. Although the inventors do not wish to be bound by theory, it is believed that the flavour impact of the liquid flavouring that is adsorbed onto the lactate particles is enhanced by the lactate carrier.

The invention also provides a process of preparing plated lactate particles, comprising:
- providing a lactate powder having a volume weighted mean diameter in the range of 10-1000 µm, said lactate powder comprising at least 25-100 wt.% calcium lactate and 0-75 wt.% edible acid, the combination of calcium lactate and edible acid constituting at least 90 wt.% of the lactate powder;
- providing a liquid flavouring; and
- combining the lactate powder and the liquid flavouring.

### DETAILED DESCRIPTION OF THE INVENTION

A first aspect of the invention relates to a particulate flavouring composition comprising at least 60 wt.% of plated lactate particles, the plated lactate particle comprising (i) a lactate particle containing calcium lactate and optionally edible acid; and (ii) a liquid flavouring that is absorbed onto the lactate particle; the plated lactate particle containing:
- 25-99.5 wt.% calcium lactate;
- 0-70 wt.% edible acid; and
- 0.5-40 wt.% of the liquid flavouring; and
wherein the combination of calcium lactate, edible acid and the liquid flavouring constitutes at least 90 wt.%, preferably at least 95 wt.% of the plated lactate particle.

Unless indicated otherwise, the term "lactate" as used herein encompasses both anhydrous and hydrated versions of the salt, such as calcium lactate pentahydrate.

The term "acid" as used herein refers to the fully protonated acid or, in case the acid contains two or more acid residues, to a fully or partially protonated acid.

The term "liquid flavouring" as used herein refers to a flavouring that is liquid at 20°C and atmospheric pressure.

The particle size (diameter) distribution of the particulate flavouring composition, of the plated lactate particles and of the lactate powder used in the preparation of the plated lactate particles can suitably be determined by means of laser diffraction (eg Malvern Mastersizer 3000).

The water content of the particulate flavouring composition typically does not exceed 35 wt.%. More preferably, the particulate flavouring composition has a water content of not more than 32 wt.%, most preferably of not more than 30 wt.%. Here the water content includes the water that is contained in hydrated salts.

The plated lactate particles in the particulate flavouring composition preferably have a volume weighted mean diameter in the range of 10-1000 µm, more preferably in the range of 50-800 µm, most preferably in the range of 200-750 µm.

The combination of calcium lactate and edible acid typically constitutes at least 90 wt.%, more preferably at least 95 wt.% of the lactate particle.

The plated lactate particle preferably contains 1.5-30 wt.%, more preferably 3-25 wt.%, most preferably 4-15 wt.% of the liquid flavouring.

The liquid flavouring that is absorbed onto the lactate particle typically contains a significant amount of solvent. Accordingly, in a preferred embodiment, the plated lactate particle contains 1-24.5 wt.%, more preferably 2-20 wt.% of a liquid solvent selected from water, ethanol, propylene glycol, glycerol, triglyceride oil (including triacetin), diglyceride oil, monoglyceride oil, terpene and combinations thereof.

In a preferred embodiment, the liquid flavouring contains a lipophilic solvent. Even more preferably, the plated lactate particle contains 1-24.5 wt.%, more preferably 2-20 wt.% of a liquid solvent selected from triglyceride oil, diglyceride oil, monoglyceride oil, terpene and combinations thereof.

In one advantageous embodiment of the present invention the lactate particles of the particulate flavouring composition contain a combination of calcium lactate and edible acid. Preferably, the lactate particle contains 30-90 wt.% calcium lactate; and 10-70 wt.% of edible acid. Even more preferably, the lactate particle contains 35-75 wt.% calcium lactate; and 25-65 wt.% of edible acid.

In the embodiment in which the lactate particles contain a combination of calcium lactate and edible acid, preferably at least 50 wt.%, more preferably at least 70 wt.% and most preferably at least 80 wt.% of the calcium lactate is anhydrous calcium lactate.

The water content of the lactate particles containing a combination of calcium lactate and edible acid preferably is in the range of 0-15 wt.%, more preferably of 0-10 wt.% and most preferably of 0-7 wt.%. Here the water content includes the water that is contained in hydrated salts.

The edible acid in the lactate particle preferably covers the surface of the lactate particle. Lactate powders containing particles in the form of calcium lactate covered by a layer of lactic acid are commercially available. Purac^{®} Powder 55 and Purac^{®} Powder 60 are examples of such commercially available lactate powders.

The edible acid that may be contained in the lactate particles is preferably selected from lactic acid, acetic acid, propionic acid, malic acid, citric acid, tartaric acid, fumaric acid, adipic acid, gluconic acid and combinations thereof. More preferably, the edible acid selected from lactic acid, tartaric acid, malic acid, citric acid and combinations thereof. Most preferably, the edible acid is lactic acid.

In another advantageous embodiment of the invention, the lactate particles essentially consist of calcium lactate, i.e. the particles contain more than 90 wt.%, preferably more than 95 wt.% calcium lactate.

In accordance with a preferred embodiment, most of the calcium lactate contained in the lactate particles that essentially consist of calcium lactate is calcium lactate pentahydrate. More preferably, at least 80 wt.% of the calcium lactate, most preferably at least 90 wt.% of the calcium lactate in the lactate particle is calcium lactate pentahydrate. Puracal^{®} PP is an example of such a calcium lactate powder that is commercially available.

The water content of the lactate particles essentially consisting of calcium lactate preferably is in the range of 8-35 wt.%, more preferably 10-32 wt.% and most preferably 12-30 wt.%. Here the water content includes the water that is contained in hydrated salts, such as calcium lactate pentahydrate.

Another aspect of the invention relates to a method of introducing flavour into an edible composition, said method comprising combining 100 parts by weight of one or more edible ingredients with 0.1-10 parts by weight of a particulate flavouring composition as described herein before. More preferably, said method comprises combining 100 parts by weight of one or more edible ingredients with 0.2-3 parts by weight of the particulate flavouring composition.

Examples of edible compositions that may be flavoured by the present method include foods and beverages. According to a particularly preferred embodiment, the edible composition is a confectionery product, more preferably a candy.

Yet another aspect of the invention relates to a process of preparing plated lactate particles, comprising:
- providing a lactate powder having a volume weighted mean diameter in the range of 10-1000 µm, said lactate powder comprising at least 25-100 wt.% calcium lactate and 0-75 wt.% edible acid, the combination of calcium lactate and edible acid constituting at least 90 wt.% of the lactate powder;
- providing a liquid flavouring; and
- combining the lactate powder and the liquid flavouring.

Preferably, the process yields plated lactate particles as defined herein before.

In a preferred embodiment, the combination of calcium lactate and edible acid constitutes at least 90 wt.%, more preferably at least 95 wt.% of the lactate powder.

The lactate powder that is employed in the present process preferably has a volume weighted mean diameter in the range of 8-800 µm, more preferably in the range of 30-700 µm, most preferably in the range of 150-650 µm.

The liquid flavouring that is employed in the present process preferably contains one or more flavour substances and optionally a liquid solvent. The liquid flavouring is preferably combined with the lactate powder by mixing the liquid flavouring with the lactate powder. Preferably, mixing of the liquid flavouring with the lactate powder comprising spraying the liquid flavouring onto the lactate powder while the particles of the lactate powder are being agitated.

The liquid flavouring typically comprises one or more flavouring ingredients selected from an essential oil, an oleoresin, a flavour substance and a compounded flavour composition. The flavouring ingredients can be chemically synthesized, biotechnologically synthesized or from a natural origin. Natural flavouring ingredients can for instance be produced by means of extraction from plant material such as vegetables, fruit, herbs and spices. Typically, these flavouring ingredients constitute at least 3 wt.%, more preferably at least 5 wt.% and most preferably at least 10 wt.% of the liquid flavouring.

According to a particularly preferred embodiment of the present process 0.6-40 parts by weight of the liquid flavouring is mixed with 100 parts by weight of the lactate powder. Even more preferably 1.5-30 parts by weight of the liquid flavouring is mixed with 100 parts by weight of the lactate powder. Most preferably, 3-25 parts by weight of the liquid flavouring is mixed with 100 parts by weight of the lactate powder.

In accordance with another preferred embodiment, the liquid flavouring contains at least 40 wt.% of a liquid solvent selected from water, ethanol, propylene glycol, glycerol, triglyceride oil (including triacetin), diglyceride oil, monoglyceride oil, terpene and combinations thereof. Even more preferably, the liquid flavouring contains at least 40 wt.% of a liquid solvent selected from triglyceride oil, diglyceride oil, monoglyceride oil, terpene and combinations thereof

In one advantageous embodiment of the present process the lactate powder employed in the present process contains a combination of calcium lactate and edible acid. More preferably, the lactate powder contains 30-92 wt.% calcium lactate and 8-70 wt.% of edible acid. Even more preferably, the lactate powder contains 35-90 wt.% calcium lactate; and 10-65 wt.% of edible acid. Most preferably, the lactate particle contains 40-85 wt.% calcium lactate; and 15-60 wt.% of edible acid.

In the embodiment in which the lactate powder contains a combination of calcium lactate and edible acid, preferably at least 50 wt.%, more preferably at least 70 wt.% and most preferably at least 80 wt.% of the calcium lactate in the lactate powder is anhydrous calcium lactate.

The water content of the lactate powder containing a combination of calcium lactate and edible acid preferably is in the range of 0-15 wt.%, more preferably of 0-10 wt.% and most preferably of 0-7 wt.%. Here the water content includes the water that is contained in hydrated salts.

In case the lactate powder contains a combination of calcium lactate and edible acid, the edible acid preferably covers the surface of the lactate particle.

The edible acid that may be contained in the lactate powder is preferably selected from lactic acid, acetic acid, propionic acid, malic acid, citric acid, tartaric acid, fumaric acid, adipic acid, gluconic acid and combinations thereof. More preferably, the edible acid selected from lactic acid, tartaric acid, malic acid, citric acid and combinations thereof. Most preferably, the edible acid is lactic acid.

In another embodiment, the lactate powder essentially consists of calcium lactate, i.e. the lactate powder contains more than 90 wt.%, more preferably more than 95 wt.% calcium lactate.

In accordance with a preferred embodiment, most of the calcium lactate contained in the lactate powder that essentially consist of calcium lactate is calcium lactate pentahydrate.

More preferably, at least 80 wt.% of the calcium lactate, most preferably at least 90 wt.% of the calcium lactate in the lactate particle is calcium lactate pentahydrate

The water content of the lactate powder essentially consisting of calcium lactate preferably is in the range of 8-35 wt.%, more preferably in the range of 10-32 wt.%, most preferably in the range of 12-30 wt.%. Here the water content includes the water that is contained in hydrated salts.

The invention is further illustrated by the following non-limiting examples.

### EXAMPLES

### Example 1

Particulate flavouring compositions 1.1, 1.2 and 1.3 according to the invention were prepared on the basis of the recipes shown in Table 1.

**Table 1**

| | Wt.% | | |
|---|---|---|---|
| | 1.1 | 1.2 | 1.3 |
| Puracal^{®} PP (ex Corbion Purac) ¹ | 90 | | 85 |
| Purac^{®} Powder 55 (ex Corbion Purac) ² | | 90 | |
| Orange essential oil (liquid flavouring ex Givaudan) | | | 15 |
| Strawberry flavour (liquid flavouring ex IFF) | 10 | 10 | |

| | | | |
|---|---|---|---|
| ¹ Calcium lactate pentahydrate (13.4-14.5 wt.% calcium, 22-27 wt.% water) ² Lactate powder (40.0-45.0 wt.% calcium lactate; 53.0-57.0 wt.% lactic acid and max. 2 wt.% water). Lactic acid covers the surface of the powder particles. | | | |

The main component of the orange essential oil is limonene (a liquid terpene). The main component of the strawberry flavour was propylene glycol (91 wt.%)

Plated lactate powders were prepared by spraying the liquid flavouring onto the powder carriers in a plastic Securitainer^{®} jar by means of a 50 mL atomizer. During the spraying, the mixture was blended with a spatula and/or shaken until the target loading was achieved.

All plated lactate powders were free flowing. The morphology of the lactate powders was not changed significantly by the plating. Table 2 shows the volume mean diameter (D([4,3]) of the powders before and after plating, indicating that some agglomeration occurred during plating.

**Table 2**

| | **D[4,3] in µm** |
|---|---|
| Puracal^{®} PP | 258 |
| Purac^{®} Powder 55 | 256 |
| Plated powder 1.1 | 300 |
| Plated powder 1.2 | 388 |
| Plated powder 1.3 | 279 |

The plated lactate powder was stored in a plastic closed cup at 40 °C and 75% RH for 10 weeks, during which the flowability of the powders was monitored. After 10 weeks at 40 °C and 75% RH all powders showed light lumping, which could easily be removed by tapping.

### Comparative Example A

Particulate flavouring compositions not according to the invention was prepared on the basis of the recipes shown in Table 3.

**Table 3**

| | **Wt.%** | |
|---|---|---|
| | **A.1** | **A.2** |
| Maltodextrin C* Dry MD 01958 (ex Cargill) | 90 | |
| Salt Suprasel^{®} medium (ex AkzoNobel) | | 97 |
| Strawberry flavour (liquid flavouring ex IFF) | 10 | 3 |

The plated powders were prepared in the same way as in Example 1.

The plated powder containing salt as the carrier already looked very wet at 3% loading, following which addition of liquid flavouring was discontinued. The plated powder made with maltodextrin was moist and became a lump after being stored at room conditions for 3 days.

## Claims

1. A particulate flavouring composition comprising at least 60 wt.% of plated lactate particles, the plated lactate particle comprising (i) a lactate particle containing calcium lactate and optionally edible acid; and (ii) a liquid flavouring that is absorbed onto the lactate particle, said liquid flavouring being liquid at 20°C and atmospheric pressure; the plated lactate particle containing:
• 25-99.5 wt.% calcium lactate;
• 0-60 wt.% edible acid; and
• 0.5-40 wt.% of the liquid flavouring; and
wherein the combination of calcium lactate, edible acid and the liquid flavouring constitutes at least 90 wt.%, preferably at least 95 wt.% of the plated lactate particle.

2. Particulate flavouring composition according to claim 1, wherein the plated lactate particles have a volume weighted mean diameter in the range of 10-1000 µm, preferably in the range of 50-800 µm.

3. Particulate flavouring composition according to claim 1 or 2, wherein the plated lactate particle contains 1-24.5 wt.% of a liquid solvent selected from water, ethanol, propylene glycol, glycerol, triglyceride oil, diglyceride oil, monoglyceride oil, terpene and combinations thereof.

4. Particulate flavouring composition according to any one of the preceding claims, wherein the lactate particle contains:
• 35-90 wt.% calcium lactate; and
• 10-65 wt.% of edible acid.

5. Particulate flavour composition according to claim 4, wherein the edible acid covers the surface of the lactate particle.

6. Particulate flavour composition according to claim 4 or 5, wherein the edible acid is selected from lactic acid, acetic acid, propionic acid, malic acid, citric acid, tartaric acid, fumaric acid, adipic acid, gluconic acid and combinations thereof.

7. Particulate flavour composition according to any one of claims 4-6, wherein at least 50 wt.% of the calcium lactate is anhydrous calcium lactate.

8. Particulate flavouring composition according to any one of claims 1-3, wherein at least 80 wt.% of the calcium lactate in the lactate particle is calcium lactate pentahydrate.

9. A method of introducing flavour into an edible composition, said method comprising combining 100 parts by weight of one or more edible ingredients with 0.1-10 parts by weight of a particulate flavouring composition according to any one of claims 1-8.

10. A process of preparing plated lactate particles, comprising:
• providing a lactate powder having a volume weighted mean diameter in the range of 10-1000 µm, said lactate powder comprising at least 25-100 wt.% calcium lactate and 0-75 wt.% edible acid, the combination of calcium lactate and edible acid constituting at least 90 wt.% of the lactate powder;
• providing a liquid flavouring, said liquid flavouring being liquid at 20°C and atmospheric pressure; and
• combining the lactate powder and the liquid flavouring.

11. Process according to claim 10, wherein the lactate powder contains:
• 30-92 wt.% calcium lactate; and
• 10-72 wt.% of edible acid.

12. Process according to claim 11, wherein the edible acid covers the surface of the lactate powder.

13. Process according to claim 11 or 12, wherein the edible acid is selected from lactic acid, acetic acid, propionic acid, malic acid, citric acid, tartaric acid, fumaric acid, adipic acid, gluconic acid and combinations thereof.

14. Process according to any one of claims 11-13, wherein at least 50 wt.% of the calcium lactate in the lactate powder is anhydrous calcium lactate.

15. Process according to claim 10, wherein at least 80 wt.% of the calcium lactate in the lactate powder is calcium lactate pentahydrate.

## Patentansprüche

1. Teilchenförmige Aromatisierungszusammensetzung, umfassend mindestens 60 Gew.% plattierte Laktatteilchen, wobei die plattierten Laktatteilchen (i) ein Laktatteilchen, das Calciumlaktat und gegebenenfalls essbare Säure enthält; und (ii) eine flüssige Aromatisierung umfasst, die auf dem Laktatteilchen absorbiert ist, wobei die flüssige Aromatisierung bei 20 °C und atmosphärischem Druck flüssig ist; wobei das plattierte Laktatteilchen enthält:
• 25 bis 99,5 Gew.% Calciumlaktat;
• 0 bis 60 Gew.% essbare Säure und
• 0,5 bis 40 Gew.% der flüssigen Aromatisierung; und
wobei die Kombination aus Calciumlaktat, essbarer Säure und der flüssigen Aromatisierung mindestens 90 Gew.%, vorzugsweise mindestens 95 Gew.% der plattierten Laktatteilchen stellt.

2. Teilchenförmige Aromatisierungszusammensetzung nach Anspruch 1, wobei die plattierten Laktatteilchen einen volumengewichteten mittleren Durchmesser im Bereich von 10 bis 1000 µm, vorzugsweise im Bereich von 50 bis 800 µm haben.

3. Teilchenförmige Aromatisierungszusammensetzung nach Anspruch 1 oder 2, wobei das plattierte Laktatteilchen 1 bis 24,5 Gew.% eines flüssigen Lösungsmittels ausgewählt aus Wasser, Ethanol, Propylenglykol, Glycerin, Triglyceridöl, Diglyceridöl, Monoglyceridöl, Terpen und Kombinationen davon umfasst.

4. Teilchenförmige Aromatisierungszusammensetzung nach einem der vorhergehenden Ansprüche, wobei das Laktatteilchen enthält:
• 35 bis 90 Gew.% Calciumlaktat und
• 10 bis 65 Gew.% essbare Säure.

5. Teilchenförmige Aromazusammensetzung nach Anspruch 4, wobei die essbare Säure die Oberfläche des Laktatteilchens bedeckt.

6. Teilchenförmige Aromazusammensetzung nach Anspruch 4 oder 5, wobei die essbare Säure ausgewählt ist aus Milchsäure, Essigsäure, Propionsäure, Äpfelsäure, Citronensäure, Weinsäure, Fumarsäure, Adipinsäure, Gluconsäure und Kombinationen davon.

7. Teilchenförmige Aromazusammensetzung nach einem der Ansprüche 4 bis 6, wobei mindestens 50 Gew.% des Calciumlaktats wasserfreies Calciumlaktat sind.

8. Teilchenförmige Aromatisierungszusammensetzung nach einem der Ansprüche 1 bis 3, wobei mindestens 80 Gew.% des Calciumlaktats in dem Laktatteilchen Calciumlaktatpentahydrat sind.

9. Verfahren zum Einbringen von Aroma in eine essbare Zusammensetzung, wobei das Verfahren Kombinieren von 100 Gewichtsteilen von einem oder mehreren essbaren Bestandteilen mit 0,1 bis 10 Gewichtsteilen einer teilchenförmigen Aromatisierungszusammensetzung gemäß einem der Ansprüche 1 bis 8 umfasst.

10. Verfahren zur Herstellung plattierter Laktatteilchen, umfassend:
• Bereitstellen eines Laktatpulvers mit einem volumengewichteten mittleren Durchmesser im Bereich von 10 bis 1000 µm, wobei das Laktatpulver mindestens 25 bis 100 Gew.% Calciumlaktat und 0 bis 75 Gew.% essbare Säure umfasst, wobei die Kombination aus Calciumlaktat und essbarer Säure mindestens 90 Gew.% des Laktatpulvers stellt;
• Bereitstellen einer flüssigen Aromatisierung, wobei die flüssige Aromatisierung bei 20 °C und atmosphärischem Druck flüssig ist; und
• Kombinieren des Laktatpulvers und der flüssigen Aromatisierung.

11. Verfahren nach Anspruch 10, wobei das Laktatpulver enthält:
• 30 bis 92 Gew.% Calciumlaktat und
• 10 bis 72 Gew.% essbare Säure.

12. Verfahren nach Anspruch 11, wobei die essbare Säure die Oberfläche des Laktatpulvers bedeckt.

13. Verfahren nach Anspruch 11 oder 12, wobei die essbare Säure ausgewählt ist aus Milchsäure, Essigsäure, Propionsäure, Äpfelsäure, Citronensäure, Weinsäure, Fumarsäure, Adipinsäure, Gluconsäure und Kombinationen davon.

14. Verfahren nach einem der Ansprüche 11 bis 13, wobei mindestens 50 Gew.% des Calciumlaktats in dem Laktatpulver wasserfreies Calciumlaktat sind.

15. Verfahren nach Anspruch 10, wobei mindestens 80 Gew.% des Calciumlaktats in dem Laktatpulver Calciumlaktatpentahydrat sind.

## Revendications

1. Composition aromatisante particulaire comprenant au moins 60 % en poids de particules de lactate plaquées, la particule de lactate plaquée comprenant (i) une particule de lactate contenant du lactate de calcium et éventuellement un acide comestible ; et (ii) un aromatisant liquide qui est absorbé sur la particule de lactate, ledit aromatisant liquide étant liquide à 20 °C et à pression atmosphérique ; la particule de lactate plaquée contenant :
• de 25 à 99,5 % en poids de lactate de calcium ;
• de 0 à 60 % en poids d'acide comestible ; et
• de 0,5 à 40 % en poids de l'aromatisant liquide ; et
la combinaison de lactate de calcium, d'acide comestible et d'aromatisant liquide constituant au moins 90 % en poids, de préférence au moins 95 % en poids de la particule de lactate plaquée.

2. Composition aromatisante particulaire selon la revendication 1, dans laquelle les particules de lactate plaquées ont un diamètre moyen pondéré en volume dans la plage de 10 à 1000 µm, de préférence dans la plage de 50 à 800 µm.

3. Composition aromatisante particulaire selon la revendication 1 ou 2, dans laquelle les particules de lactate plaquées contiennent de 1 à 24,5 % en poids d'un solvant liquide sélectionné parmi l'eau, l'éthanol, le propylène glycol, le glycérol, une huile de triglycéride, une huile de diglycéride, une huile de monoglycéride, le terpène et des combinaisons de ceux-ci.

4. Composition aromatisante particulaire selon l'une quelconque des revendications précédentes, dans laquelle la particule de lactate plaquée contient :
• de 35 à 90 % en poids de lactate de calcium ; et
• de 10 à 65 % en poids d'acide comestible.

5. Composition aromatique particulaire selon la revendication 4, dans laquelle l'acide comestible couvre la surface de la particule de lactate.

6. Composition aromatique particulaire selon la revendication 4 ou 5, dans laquelle l'acide comestible est sélectionné parmi l'acide lactique, l'acide acétique, l'acide propionique, l'acide malique, l'acide citrique, l'acide tartrique, l'acide fumarique, l'acide adipique, l'acide gluconique et des combinaisons de ceux-ci.

7. Composition aromatique particulaire selon l'une quelconque des revendications 4 à 6, dans laquelle au moins 50 % en poids du lactate de calcium est du lactate de calcium anhydre.

8. Composition aromatisante particulaire selon l'une quelconque des revendications 1 à 3, dans laquelle au moins 80 % en poids du lactate de calcium dans la particule de lactate est du lactate de calcium pentahydrate.

9. Procédé d'introduction d'un arome dans une composition comestible, ledit procédé comprenant la combinaison de 100 parties en poids d'un ou plusieurs ingrédients comestibles avec 0,1 à 10 parties en poids d'une composition aromatisante particulaire selon l'une quelconque des revendications 1 à 8.

10. Procédé de préparation de particules de lactate plaquées, comprenant :
• la fourniture d'une poudre de lactate ayant un diamètre moyen pondéré en volume dans la plage de 10 à 1000 pm, ladite poudre de lactate comprenant au moins 25 à 100 % en poids de lactate de calcium et 0 à 75 % en poids d'acide comestible, la combinaison de lactate de calcium et d'acide comestible constituant au moins 90 % en poids de poudre de lactate ;
• la fourniture d'un aromatisant liquide, ledit aromatisant liquide étant liquide à 20 °C et à pression atmosphérique ; et
• la combinaison de la poudre de lactate et de l'aromatisant liquide.

11. Procédé selon la revendication 10, dans lequel la poudre de lactate contient :
• de 30 à 92 % en poids de lactate de calcium ; et
• de 10 à 72 % en poids d'acide comestible.

12. Procédé selon la revendication 11, dans lequel l'acide comestible couvre la surface de la poudre de lactate.

13. Procédé selon la revendication 11 ou 12, dans lequel l'acide comestible est sélectionné parmi l'acide lactique, l'acide acétique, l'acide propionique, l'acide malique, l'acide citrique, l'acide tartrique, l'acide fumarique, l'acide adipique, l'acide gluconique et des combinaisons de ceux-ci.

14. Procédé selon l'une quelconque des revendications 11 à 13, dans lequel au moins 50 % en poids du lactate de calcium dans la poudre de lactate est du lactate de calcium anhydre.

15. Procédé selon la revendication 10, dans lequel au moins 80 % en poids du lactate de calcium dans la poudre de lactate est du lactate de calcium pentahydrate.
